# EUROPEAN PATENT APPLICATION

(11) **EP 1 265 129 A2**
(43) Date of publication of application: **11.12.2002**
(21) Application number: 02011967.3
(22) Date of filing: 29.05.2002
(51) Int. Cl.: G06F 3/12

(54) **Image processing apparatus, image processing system and image processing program storage medium**

(30) Priority: 07.06.2001 JP 2001172858
(71) Applicant: FUJI PHOTO FILM CO., LTD., Kanagawa-ken, 250-0193 (JP)
(72) Inventor: Ihara, Hotsumi, Fuji Photo Film Co.,Ltd., Ashigarakami-gun, Kanagawa 258-8538 (JP)
(74) Representative: Klunker . Schmitt-Nilson . Hirsch

(57) **Abstract**

An image processing apparatus has an output image data creating section for obtaining page description data and creating output image data suitable for an output device, to which code information specifying the output image data is appended, in accordance with the obtained page description data, and a data management section for managing the page description data and the job ticket, which are the basis for creation of the output image data to which code information is appended, in association with the code information.

## Description

### BACKGROUND OF THE INVENTION

### Field of the Invention

The present invention relates to image processing apparatus and image processing system for managing job tickets and the like, which describe parameters for creating page description data and output image data suitable for an image output device for outputting an image, and an image processing program which causes a computer and a computer net work to operate as such image processing apparatus and image processing system.

### Description of the Related Art

Hitherto, in a field of the printing, there are performed such operations that an editing work is carried out on a DTP (Desktop Publishing) editing application, which is installed in a computer, to create editing application data; page description data described with for example a page description language is created in accordance with the editing application data, and a predetermined job ticket is appended to the page description data and then outputted to RIP (Raster Image Processor) for converting the page description data into raster image data, so that output image data, in which the page description data is subjected to a rasterize processing in accordance with an instruction of the appended job ticket, is obtained.

It is unusual in a process for creating the output image data that proofreading is completed at one time, and it often happens that correction is performed in some process of the creating process. To perform the re-proofreading, for example, in the event that correction for a page, such as correction for an input error for characters, is performed, the correction is performed returning to the editing application data. Or alternatively, for example, in the event that a parameter for halftone dot processing is corrected, corrections for the editing application data, the page description data and job ticket are performed, as an occasion arises, in such a way that only the job ticket is corrected and the corrected job ticket is appended to the created page description data.

When such a re-proofreading is performed a plurality of numbers of time, combinations of output image data obtained after the rasterize processing by the RIP, with editing application data, page description data and job ticket, in accordance with which the output image data is created, exist by the same number as the number of times that the proofreading is carried out.

By the way, actually, the management of the combinations of the above-mentioned data is performed by means of a memory by an operator, a record onto an account book, or a memorandum onto an output matter. Accordingly, this imposes a great burden on an operator's data management, and it is very inefficient.

Further, for example, in the event that output image data before the proofreading is needed, it is performed that the above-mentioned data of the previously used combinations are used again to obtain the output image data. According to the means for managing the combinations of data as mentioned above, there is no insurance of surely locating the necessary data, and even if the necessary data is located, there is a possibility that a lot of time is needed.

### SUMMARY OF THE INVENTION

In view of the foregoing, it is an object of the present invention to provide image processing apparatus and image processing system capable of readily and exactly specifying editing application data, page description data and job ticket, in accordance with which the output image data is created, and an image processing program which causes a computer and a computer net work to operate as such image processing apparatus and image processing system.

To achieve the above-mentioned object, the present invention provides an image processing apparatus comprising:
an output image data creating section for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management section for managing the page description data and the job ticket, which are the basis for creation of the output image data to which code information is appended, in association with the code information.

Here, the page description data implies data described in a page description language, for example, PostScript language of Adobe Systems Incorporated., or data described in a format for page description such as PDF (Portable Document Format).

According to the image processing apparatus of the present invention as mentioned above, the output image data creating section creates output image data suitable for an output device, to which code information specifying the output image data is appended, and the data management section manages the page description data and the job ticket, which are the basis for creation of the output image data to which code information is appended, in association with the code information. This feature makes it possible for an operator to readily and exactly specify page description data and job ticket, which are associated with desired output image data, in accordance with the code information.

With respect to editing application data associated with the output image data, an operator can exactly specify the editing application data in accordance with a result of rasterize processing, or the page description data associated with the output image data, specified in the manner as mentioned above. Thus, it is possible for the operator to readily and exactly specify the editing application data too.

In the image processing apparatus according to the present invention as mentioned above, it is preferable that said data management section comprises:
a code information obtaining section for obtaining the code information appended onto the output image data; and
a data providing section for providing the page description data and the job ticket, which are associated with the code information obtained by said code information obtaining section.

According to the data management section having the code information obtaining section and the data providing section, it is possible for an operator to readily and exactly specify a combination of a desired output image data, and the page description data and the job ticket, which are associated with the output image data, in accordance with the code information, and further it is possible to retrieve the combination of those data in short time.

In the image processing apparatus according to the present invention as mentioned above, it is preferable that said image processing apparatus further comprises information obtaining section for obtaining editing application data before converted into page description data representative of an editing result, which is created by an editing application program operating in accordance with an editing operation of an operator, or information specifying the editing application data in association with the code information,
said data management device manages the editing application data before converted into page description data as well as the page description data and the job ticket in association with the code information.

As mentioned above, the editing application data can be specified by a result of the rasterize processing and the page description data. However, according to the image processing apparatus having the information obtaining section, wherein the data management section manages also the editing application data before converted into page description data as well as the page description data and the job ticket in association with the code information, it is possible to reduce the burden of the operator and also to specify the editing application data more readily and exactly as compared with one in which an operator specifies the editing application data in accordance with a result of the rasterize processing and the page description data.

Further, to achieve the above-mentioned object of the invention, the present invention provides an image processing system comprising:
an output image data creating device for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management device for managing the page description data and the job ticket, which are the basis for creation of the output image data to which code information is appended, in association with the code information.

Here, the page description data implies data described in a page description language, as mentioned above, for example, PostScript language of Adobe Systems Incorporated., or data described in a format for page description such as PDF (Portable Document Format).

According to the image processing system of the present invention as mentioned above, the output image data creating device creates output image data suitable for an output device, to which code information specifying the output image data is appended, and the data management device manages the page description data and the job ticket, which are the basis for creation of the output image data to which code information is appended, in association with the code information. This feature makes it possible for an operator to readily and exactly specify page description data and job ticket, which are associated with desired output image data, in accordance with the code information.

With respect to editing application data associated with the output image data, an operator can exactly specify the editing application data in accordance with a result of rasterize processing, or the page description data associated with the output image data, specified in the manner as mentioned above. Thus, it is possible for the operator to readily and exactly specify the editing application data too.

In the image processing system according to the present invention as mentioned above, it is preferable that said data management device comprises:
a code information obtaining section for obtaining the code information appended onto the output image data; and
a data providing section for providing the page description data and the job ticket, which are associated with the code information obtained by said code information obtaining section.

According to the data management device having the code information obtaining section and the data providing section, it is possible for an operator to readily and exactly specify a combination of a desired output image data, and the page description data and the job ticket, which are associated with the output image data, in accordance with the code information, and further it is possible to retrieve the combination of those data in short time.

In the image processing system according to the present invention as mentioned above, it is acceptable that said data management device receives from said output image data creating device the page description data and the job ticket, which are the basis for creation of the output image data to which code information is appended, and manages the page description data and the job ticket received in association with the code information.

Or alternatively, it is acceptable that said data management device receives from said output image data creating device information specifying the page description data and the job ticket, which are the basis for creation of the output image data to which code information is appended, retaining the page description data and the job ticket per se in said output image data creating device, and manages the page description data and the job ticket existing in said output image data creating device in association with the code information.

It is acceptable that the data management device manages the page description data and the job ticket, which are received from the output image data creating device, in association with the code information, or alternatively it acceptable that the data management device receives from the output image data creating device information specifying the page description data and the job ticket, and manages the page description data and the job ticket in accordance with this information, in association with the code information.

In the image processing system according to the present invention as mentioned above, it is preferable that said data management device comprises information obtaining section for obtaining editing application data before converted into page description data representative of an editing result, which is created by an editing application program operating in accordance with an editing operation of an operator, or information specifying the editing application data in association with the code information, and
said data management device manages the editing application data before converted into page description data as well as the page description data and the job ticket in association with the code information.

As mentioned above, the editing application data can be specified by a result of the rasterize processing and the page description data. However, according to the image processing system wherein the data management device has the information obtaining section, and the data management device manages also the editing application data before converted into page description data as well as the page description data and the job ticket in association with the code information, it is possible to reduce the burden of the operator and also to specify the editing application data more readily and exactly as compared with one in which an operator specifies the editing application data in accordance with a result of the rasterize processing and the page description data.

Further, to achieve the above-mentioned object of the invention, the present invention provides an image processing program storage medium storing an image processing program which causes a computer to operate as an image processing apparatus for performing an image processing, when said image processing program is incorporated into the computer and is executed, said image processing program comprising:
an output image data creating section for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management section for managing the page description data and the job ticket, which are the basis for creation of the output image data to which code information is appended, in association with the code information.

In the image processing program storage medium according to the present invention as mentioned above, it is preferable that said data management section comprises:
a code information obtaining section for obtaining the code information appended onto the output image data; and
a data providing section for providing the page description data and the job ticket, which are associated with the code information obtained by said code information obtaining section.

To achieve the above-mentioned object of the invention, the present invention provides an image processing program storage medium storing an image processing program which causes a computer network to operate as an image processing system for performing an image processing, when said image processing program is executed on the computer network to which a plurality of computers is connected, said image processing program comprising:
an output image data creating section for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management section for managing the page description data and the job ticket, which are the basis for creation of the output image data to which code information is appended, in association with the code information.

In the image processing program storage medium according to the present invention as mentioned above, it is preferable that said data management section comprises:
a code information obtaining section for obtaining the code information appended onto the output image data; and
a data providing section for providing the page description data and the job ticket, which are associated with the code information obtained by said code information obtaining section.

### BRIEF DESCRIPTION OF THE DRAWINGS

Fig. 1 is a schematic structural view of a computer network in which an embodiment of an image processing system of the present invention is formed.
Fig. 2 is a view showing a part of hardware of the computer network for the image processing system shown in Fig. 1.
Fig. 3 is a schematic structural view of hardware of a printing data managing host having an appearance shown in Fig. 2.
Fig. 4 is a view showing an embodiment of an image processing program stored in an image processing program storage medium of the present invention.
Fig. 5 is a functional block diagram of an embodiment of an image processing system of the present invention.
Fig. 6 is a view showing an example of an output image represented by output image data to which code information is added.
Fig. 7 is a flowchart useful for understanding an embodiment of an image processing system of the present invention.
Fig. 8 is a flowchart useful for understanding an embodiment of an image processing system of the present invention.
Fig. 9 is a flowchart useful for understanding an embodiment of an image processing system of the present invention.
Fig. 10 is a view showing a part of hardware of the computer network for the image processing system as another embodiment of the present invention.
Fig. 11 is a functional block diagram showing an embodiment of an image processing apparatus in the image processing system as another embodiment of the present invention.

### DETAILED DESCRIPTION OF PREFERRED EMBODIMENTS

Embodiments of the present invention will be described with reference to the accompanying drawings.

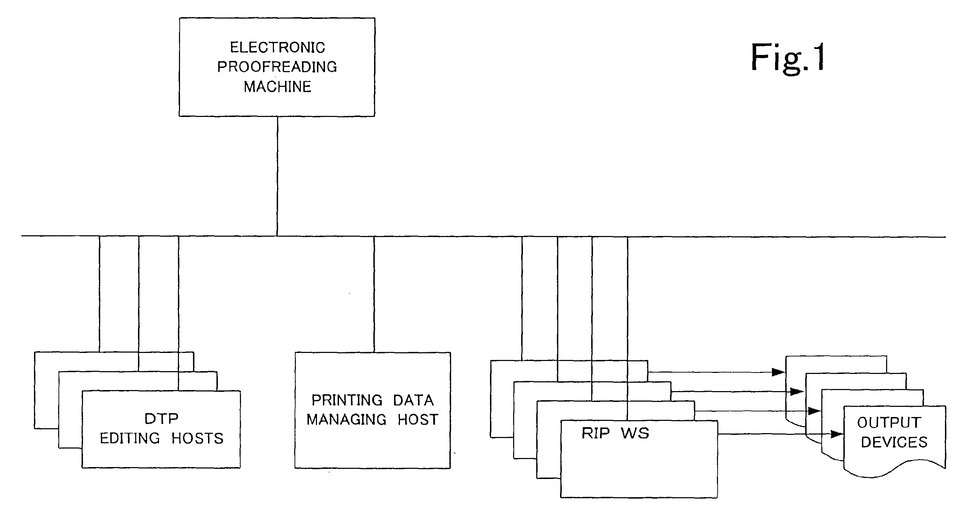

Fig. 1 is a schematic structural view of a computer network in which an embodiment of an image processing system of the present invention is formed.

As shown in Fig. 1, the computer network comprises a plurality of DTP editing hosts for performing a creation of editing application data and a creation of page description data, a plurality of RIP workstations (RIP WS) for receiving the page description data described in a page description language, which are created in the DTP editing hosts, to create output image data in accordance with the page description data, a printing data managing host for managing a plurality of data (which will be described later), and an electronic proofreading machine for performing on a computer character proofreading and the like using proofreading marks. Those structural elements are connected with one another via a communication line such as a public telephone line. Each of the RIP workstations (RIP WS) is provided with the associated output device for an image outputting use.

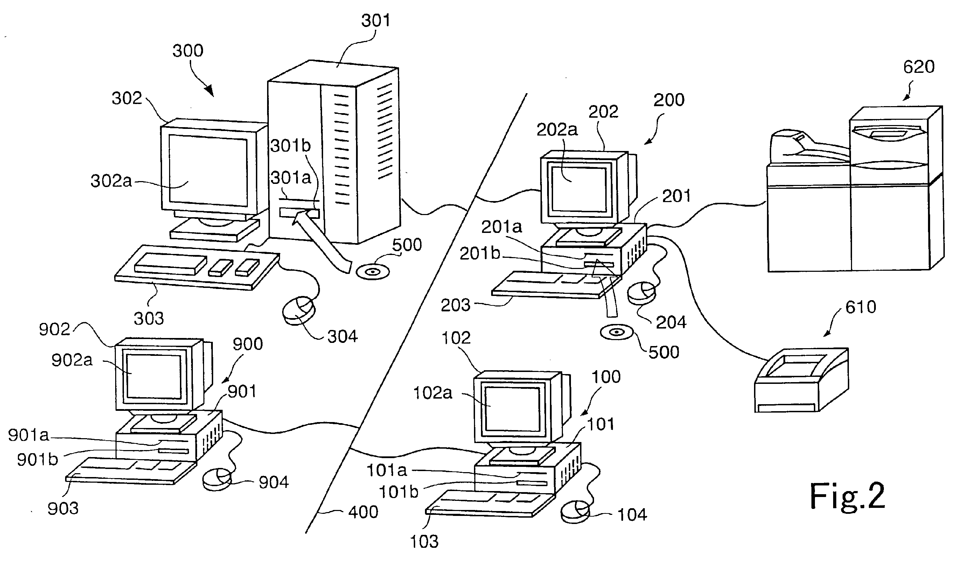

Fig. 2 is a view showing a part of hardware of the computer network for the image processing system shown in Fig. 1.

Fig. 2 exemplarily shows a DTP editing host 100, a RIP workstation (RIP WS) 200, a printing data managing host 300, two output devices 610 and 620 for the image output use, and an electronic proofreading machine 900. The DTP editing host 100, the RIP workstation (RIP WS) 200, the printing data managing host 300, and the electronic proofreading machine 900 are connected to one another via a communication line 400. The two output devices 610 and 620 for the image output use are connected to the RIP workstation (RIP WS) 200. According to the present embodiment, the RIP workstation (RIP WS) 200 corresponds to the output image data creating apparatus in the image processing system of the present invention, and the printing data managing host 300 corresponds to the data managing apparatus in the image processing system of the present invention.

The DTP editing host 100, the RIP workstation (RIP WS) 200, the printing data managing host 300, and the electronic proofreading machine 900 comprise: on an appearance basis, main frame units 101, 201, 301, and 901; image display units 102, 202, 302, and 902 for displaying images and character strings on display screens 102a, 202a, 302a, and 902a in accordance with instructions from the main frame units 101, 201, 301, and 901, respectively; keyboards 103, 203, 303, and 903 for inputting various sorts of information according to a key operation into the main frame units 101, 201, 301, and 901, respectively; and mice 104, 204, 304, and 904 for designating arbitrary positions on the display screens 102a, 202a, 302a, and 902a to input instructions according to, for example, icons and the like displayed on the positions, respectively. The main frame units 101, 201, 301, and 901 have, on an appearance basis, FD mounting slots 101a, 201a, 301a, and 901a for mounting flexible disks (FD), and CD-ROM mounting slots 101b, 201b, 301b, and 901b for mounting CD-ROMs, respectively. A CD-ROM 500 (which will be described later) is mounted on the CD-ROM mounting slots 201b and 301b of the RIP workstation (RIP WS) 200 and the printing data managing host 300.

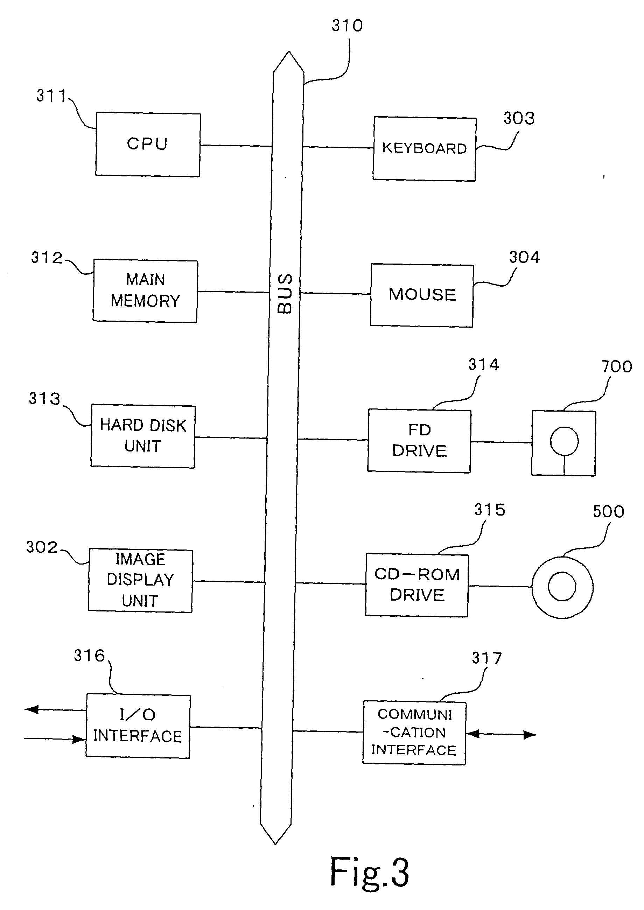

Fig. 3 is a schematic structural view of hardware of a printing data managing host having an appearance shown in Fig. 2.

The hardware construction view of the printing data managing host shows: a CPU (central processing unit) 311 for executing various sorts of program; a main memory 312 in which a program stored in a hard disk unit 313 is read and is developed for execution by the CPU 311; the hard disk unit 313 storing various sorts of programs and data; an FD drive 314 for accessing an FD 700 mounted on the FD drive 314; a CD-ROM drive 315 for accessing a CD-ROM 500 mounted on the CD-ROM drive 315; an I/O interface 316 in which for example, it is connected to a scanner (not illustrated) for taking in an image to receive image data from the scanner, and for example, it is connected to the output devices 610 and 620 (cf. Fig. 2) such as color printers for image output use to transmit output image data to the output devices 610 and 620; and a communication interface 317 connected to the communication line 400 (cf. Fig. 2) to control a communication with another machine. Those elements are connected via a bus 310 to the image display unit 302, the keyboard 303 and the mouse 304, which are also shown in Fig. 2.

The CD-ROM 500 stores therein an image processing program which causes a computer network to operate as an image processing apparatus. The CD-ROM 500 is mounted on the CD-ROM drive 315 so that the image processing program stored in the CD-ROM 500 is uploaded onto the computer and is stored in the hard disk unit 313.

The structure of the hardware of the DTP editing host 100, the RIP workstation (RIP WS) 200, and the electronic proofreading machine 900 shown in Fig. 2 is the same as the structure of the hardware of the printing data managing host 300 shown in Fig. 3, and thus the redundant explanation will be omitted.

Thus, the image processing system according to the present embodiment is constructed on the computer network and is used.

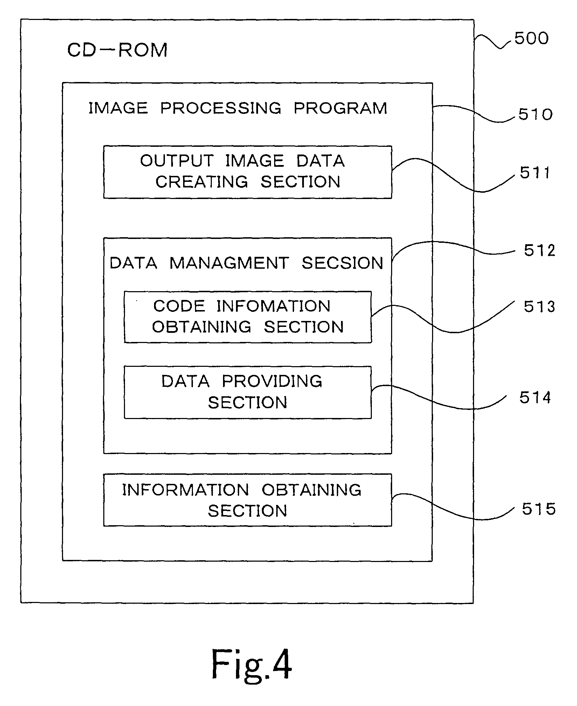

Fig. 4 is a view showing an embodiment of an image processing program stored in an image processing program storage medium of the present invention.

An image processing program 510 is stored in the CD-ROM 500 shown in Fig. 2.

The image processing program 510 comprises an output image data creating section 511, a data management section 512 and an information obtaining section 515. The data management section 512 comprises a code information obtaining section 513 and a data providing section 514. Effect of the elements of the image processing program 510 will be described later.

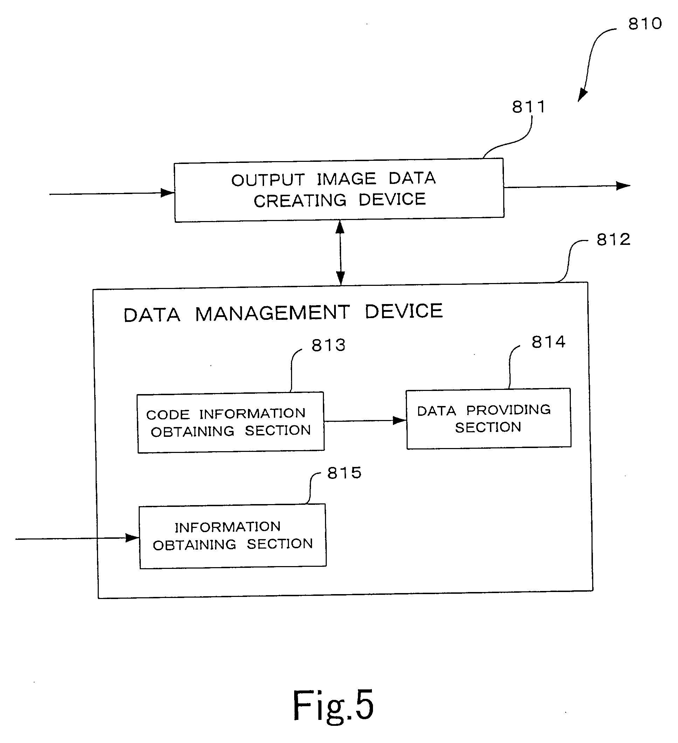

Fig. 5 is a functional block diagram of an embodiment of an image processing system of the present invention.

An image processing system 810 shown in Fig. 5 is implemented when the image processing program 510 shown in Fig. 4 is loaded onto the respective computers of the RIP WS 200 and the printing data managing host 300 shown in Fig. 2 and Fig. 3, the output image data creating section 511 of the image processing program 510 is executed in the RIP WS 200, and the data management section 512 and the information obtaining section 515 of the image processing program 510 are executed in the printing data managing host 300.

The image processing system 810 shown in Fig. 5 comprises an output image data creating device 811 corresponding to the RIP WS 200 in the present embodiment, and a data management device 812 corresponding to the printing data managing host 300 in the present embodiment. The data management device 812 comprises a code information obtaining section 813, a data providing section 814 and an information obtaining section 815. The output image data creating device 811, the data management device 812, the code information obtaining section 813, the data providing section 814 and an information obtaining section 815 correspond to the output image data creating device 511, the data management device 512, the code information obtaining section 513, the data providing section 514 and the information obtaining section 515 in the image processing program 510 shown in Fig. 4, respectively. It is noted, however, that even if the same names are used between the elements of the image processing program 510 shown in Fig. 4 and the elements of the image processing program 810 shown in Fig. 5, the elements of the image processing program 510 indicate the application programs for implementing effects of the elements, and on the other hand, the elements of the image processing program 810 shown in Fig. 5 indicate a combination of hardware and software for implementing effects of the elements.

Hereinafter, the elements of the image processing program 810 shown in Fig. 5 will be explained, and whereby the elements of the image processing program 510 shown in Fig. 5 will also be explained.

The output image data creating device 811 is an element which is constructed when the output image data creating device 511 of the image processing program 510 shown in Fig. 4 is installed in the RIP WS 200 shown in Fig. 2 and Fig. 3. The output image data creating device 811 obtains page description data and creates output image data suitable for an output device, to which code information specifying the output image data is appended, using a job ticket selected from among a plurality of job tickets describing parameters for creating output image data suitable for an image output device outputting an image, in accordance with the obtained page description data. The output image data creating device 811 corresponds, on a hardware basis, to a combination of the keyboard 203 or the mouse 204, the image display unit 202, which are shown in Fig. 2 and Fig. 3, and the CPU 311 for executing the output image data creating device 511 (cf. Fig. 4) as a program component.

The data management device 812 is constructed when the data management section 512 and the information obtaining section 515 of the image processing program 510 shown in Fig. 4 is installed in the printing data managing host 300 shown in Fig. 2 and Fig. 3. The data management device 812 manages the page description data and the job ticket, which are the basis for creation of the output image data to which code information created by the output image data creating device 811 is appended, in association with the code information. It is acceptable that the data management device 812 manages the page description data and the job ticket received from the output image data creating device 811 in association with the code information. Or alteration, it is acceptable that the data management device 812 receives information specifying the page description data and the job ticket from the output image data creating device 811 and manages the page description data and the job ticket in association with the code information in accordance with the received information. The information obtaining section 815 obtains editing application data before converted into page description data representative of an editing result, which is created by the DTP editing host 100 shown in Fig. 2 and Fig. 3, or information specifying the editing application data in association with the code information. The data management device 812 manages the editing application data before converted into page description data as well as the page description data and the job ticket in association with the code information. Further, the data management device 812 manages, as an occasion arises, in association with the code information, in addition to the page description data, the job ticket and the editing application data, sets of various sorts of data consisting of, for example, output image data, PDF data that is intermediate data for creating the output image data from page description data, log data representative of a line work image, a continuous tone image and a processing record in the output image data creating device 811, and thumbnail image data for a preview in which the output image data is thinned out, which are associated with the page description data, the job ticket and the editing application data. Hereinafter, sets of data consisting of those various sorts of data, the page description data and job ticket are referred to as a job. The data management device 812 corresponds, on a hardware basis, to a combination of the keyboard 303 or the mouse 304, which are shown in Fig. 2 and Fig. 3, the image display unit 302, and the CPU 311 for executing the data management section 512 and the information obtaining section 515 (cf. Fig. 4) as program components.

The data management device 812 comprises a code information obtaining section 813 for obtaining code information appended on output image data, and a data providing section 814 for providing data (for example, a name of a job ticket and information which the job ticket has) constituting a job, which are associated with the code information obtained by the code information obtaining section 813, and editing application data together with the associated code information in accordance with an operator's operation for the keyboard or the mouse of the printing data managing host 300. The code information obtaining section 813 and the data providing section 814 are constructed when the code information obtaining section 513 and the data providing section 514 of the image processing program 510 shown in Fig. 4 are installed in the printing data managing host 300 shown in Fig. 2 and Fig. 3. The code information obtaining section 813 and the data providing section 814 correspond, on a hardware basis, to a combination of the keyboard 303 or the mouse 304, which are shown in Fig. 2 and Fig. 3, the image display unit 302, and the CPU 311 for executing the code information obtaining section 513 and the data providing section 514 (cf. Fig. 4) as program components.

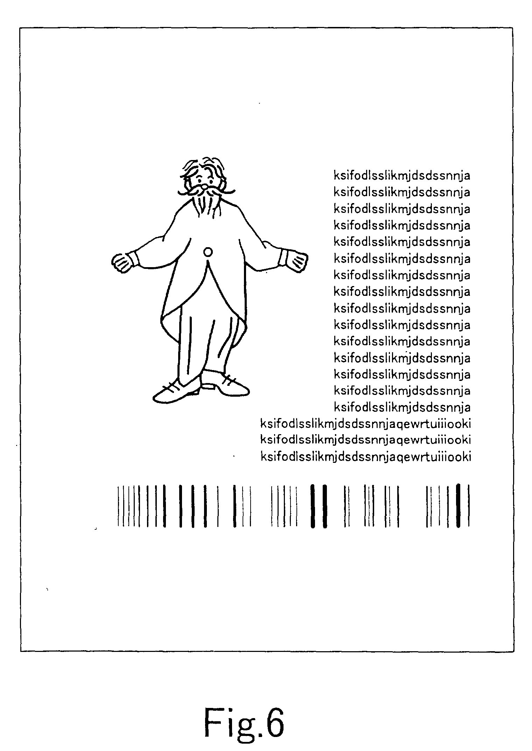

Fig. 6 is a view showing an example of an output image represented by output image data to which code information is added.

As shown in Fig. 6, code information specifying the output image is added under the output image in form of a bar code. The code information obtaining section 813 (cf. Fig. 5) can obtain the code information using a bar code reader (not illustrated).

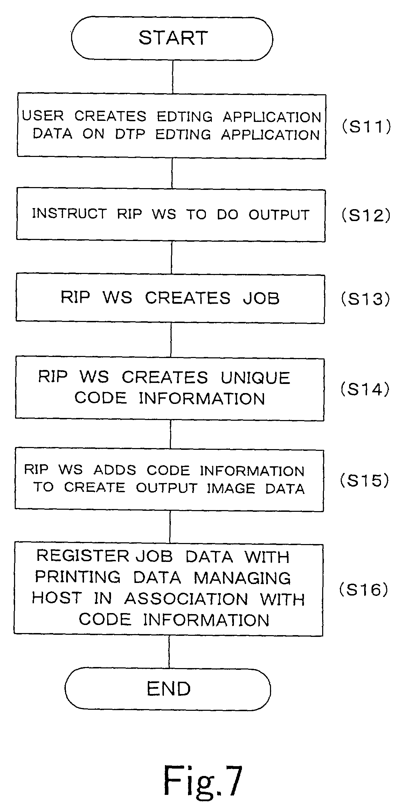

Fig. 7 is a flowchart useful for understanding an embodiment of an image processing system of the present invention.

This flowchart shows a process in which the RIP WS 200 (cf. Fig. 2) creates output image data to which code information is added, and data is registered with the printing data managing host 300 (cf. Fig. 2).

First, the DTP editing host 100 (cf. Fig. 2) operates an editing application program in accordance with an operator's operation to create editing application data representative of an editing result (a step S11). At that time, the editing application program page description data in accordance with the created editing application data.

Next, in a step S12, an output of the page description data created in the step S11 is instructed for the RIP WS 200 (cf. Fig. 2) corresponding to the output image data creating device 811 (cf. Fig. 5).

Upon receipt of the output instruction in the step S12, the RIP WS 200 (cf. Fig. 2) creates output image data suitable for an output device in accordance with the page description data created in the step S11 and using the job ticket selected among a plurality of job tickets, and further creates the above-mentioned job (a step S13).

The RIP WS 200 (cf. Fig. 2) creates unique code information specifying a job for the job created in the step S13 (a step S14). This code information is constituted of characters and numerals, which are capable of being dealt with by a computer.

The RIP WS 200 (cf. Fig. 2) appends the code information created in the step S14 to the output image data created in the step S13, and creates output image data for an output (a step S15). This code information is converted into image data so that it is recognized by human eyes and a character reading device such as an OCR (Optical Character Reader) when it is outputted, and then be appended to the output image data. In other words, the code information is converted into, for example, image data to be outputted in form of a character image such as English letters and numerals, and Chinese characters, which can be recognized by human eyes, or for example, image data to be outputted in form of an image such as a bar code, which can be recognized by a character reader device, and then be appended to the output image data (cf. Fig. 6).

Next, the RIP WS 200 (cf. Fig. 2) automatically registers the data constituting the job created in the step S13 with the printing data managing host 300 (cf. Fig. 2) corresponding to the data management device 812 (cf. Fig. 5) in association with the code information. It is acceptable that the printing data managing host 300 manages data constituting the job in association with the code information. Or alternatively, it is acceptable that the printing data managing host 300 receives information specifying data constituting the job from the output image data creating device 811 and manages data constituting the job in association with the code information in accordance with the information.

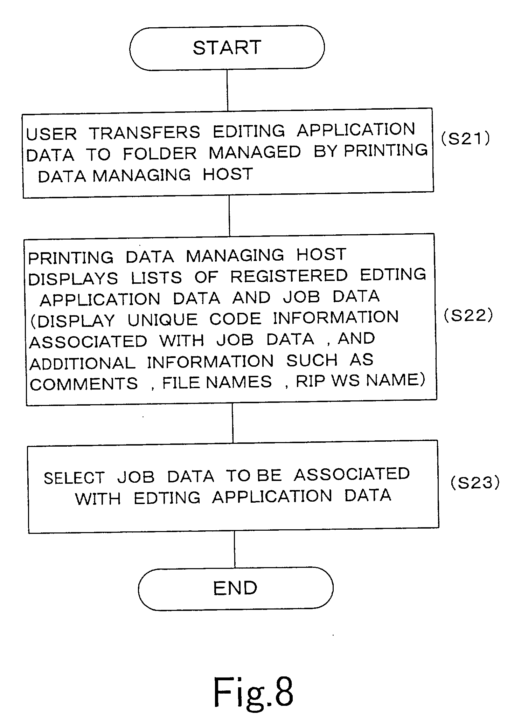

Fig. 8 is a flowchart useful for understanding an embodiment of an image processing system of the present invention.

This flowchart shows a process in which editing application data is registered with the printing data managing host 300 (cf. Fig. 2) together with data constituting the job in association with the code information.

First, in a step S21, the editing application data (cf. the step S11 in Fig. 7) created by the DTP editing host 100 (cf. Fig. 2) is transferred to the printing data managing host 300 (cf. Fig. 2) in accordance with an operator's operation in the DTP editing host 100 (cf. Fig. 2) or the printing data managing host 300 (cf. Fig. 2).

Next, in a step S22, in the printing data managing host 300 (cf. Fig. 2), a list of the data (cf. the step S16 in Fig. 7) constituting the job to which the registered code information is appended, and a list of the transferred editing application data are displayed in accordance with an operator's operation.

An operator selects data constituting the job associated with editing application data to be registered, and registers the editing application data with the printing data managing host 300 (cf. Fig. 2) in association with the code information (a step S23).

It is acceptable that ways of registering the editing application data with the printing data managing host 300 (cf. Fig. 2) in association with the code information may be manually performed as mentioned above, or alternatively automatically performed when the DTP editing host 100 (cf. Fig. 2) creates the page description data.

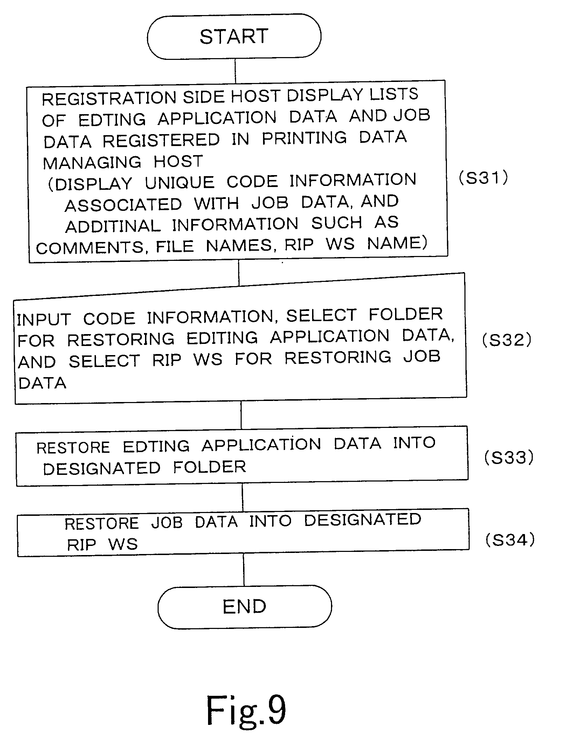

Fig. 9 is a flowchart useful for understanding an embodiment of an image processing system of the present invention.

This flowchart shows a process in which data registered with the printing data managing host 300 (cf. Fig. 2) are retrieved and restored.

First, in the printing data managing host 300 (cf. Fig. 2), the code information obtaining section 813 (cf. Fig. 5) obtains code information in accordance with an operator's operation, and the data providing section 814 (cf. Fig. 5) displays lists of data (for example a name of a job ticket and information involved in the job ticket) constituting the job, to which the registered code information is appended, and the editing application data (cf. the step S23 in Fig. 8), which are associated with the code information obtained by the code information obtaining section 813, together with the associated code information (a step S31).

Next, in the printing data managing host 300 (cf. Fig. 2), when desired code information is entered in accordance with an operator's operation, a set of data constituting the job to which code information is appended and the editing application data is specified. Further, an operator selects a destination in which the data constituting the job and the editing application data thus specified is restored (a step S32). It is acceptable that ways of inputting code information in accordance with an operator's operation may be a way that the operator operates the keyboard or the mouse of the printing data managing host 300, or alternatively a way that the operator operates a character reader device such as an OCR and the like (not illustrated).

The printing data managing host 300 (cf. Fig. 2) restores the editing application data into the restoring destination selected by an operator (a step S33).

Further, the printing data managing host 300 (cf. Fig. 2) restores the data constituting the job into the restoring destination selected by an operator (a step S33).

In the re-output, for example, in the event that the complete same output as the previous time is performed, the output image data is derived from among the data constituting the job and is transferred to the RIP WS 200 (cf. Fig. 2). On the other hand, for example, in the event that there is a need to correct a parameter of the job ticket, the page description data and the job ticket are derived from among the data constituting the job and is transferred to the RIP WS 200 (cf. Fig. 2). Further, for example, in the event that the correction is performed returning to the editing software, the editing application data is derived and is transferred to the DTP editing host 100 (cf. Fig. 2).

Further, in the event that character proofreading or the like using proofreading marks is performed on a computer, medium data such as PDF data and the like is derived from the data constituting the job and is transferred to the electronic proofreading machine 900 (cf. Fig. 2).

According to the above-mentioned embodiments, there is explained an example of an image processing system in which the RIP WS corresponding to the output image data creating apparatus and the printing data managing host corresponding to the data management host are constructed with different computers. However, the present invention is not restricted to this structure, and it is possible to apply the present invention also to an image processing system arranged in such a manner that the RIP WS has a function of the printing data managing host too.

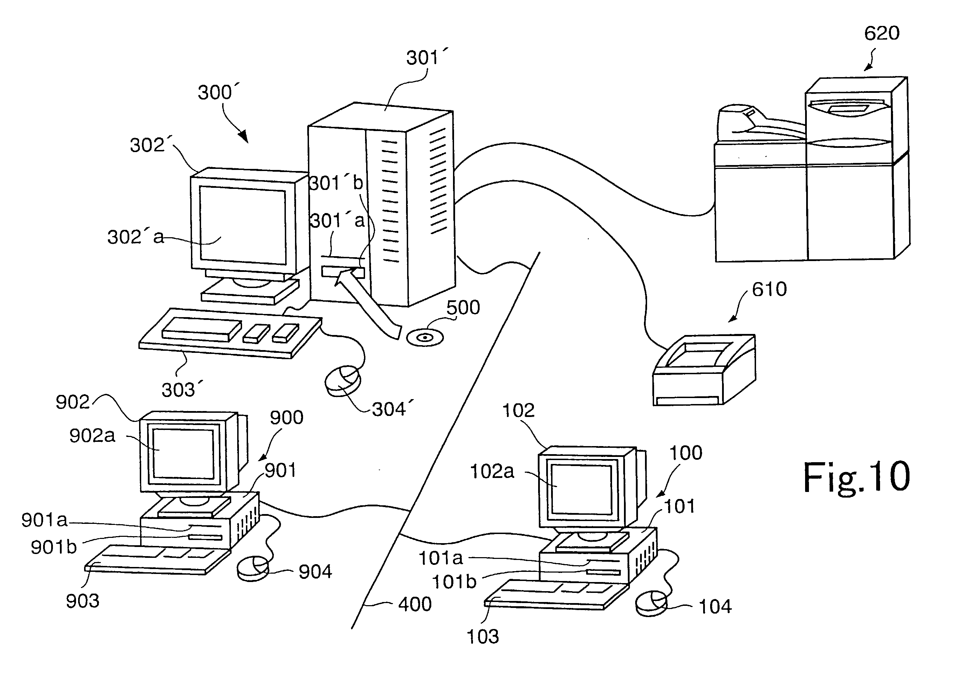

Fig. 10 is a view showing a part of hardware of the computer network for the image processing system as another embodiment of the present invention.

Fig. 10 exemplarily shows a DTP editing host 100, an image processing apparatus 300', two output devices 610 and 620 for image outputting, and an electronic proofreading machine 900. The DTP editing host 100, the image processing apparatus 300', and the electronic proofreading machine 900 are connected with one another via a communication line 400. The two output devices 610 and 620 are connected to the image processing apparatus 300'. According to the present embodiment, the image processing apparatus 300' corresponds to the image processing apparatus of the present invention, wherein the RIP WS has a function of the printing data managing host.

The image processing apparatus 300' comprises, on an appearance basis, a main frame unit 301'; an image display unit 302 for displaying images and character strings on a display screen 302'a in accordance with instructions from the main frame unit 301'; a keyboard 303' for inputting various sorts of information according to a key operation into the main frame unit 301'; and a mouse 304' for designating an arbitrary position on the display screen 302'a to input instructions according to, for example, an icon and the like displayed on the position. The main frame unit 301' has, on an appearance basis, an FD mounting slot 301'a for mounting a flexible disk (FD), and a CD-ROM mounting slot 301'b for mounting a CD-ROM.

The DTP editing host 100 and the electronic proofreading machine 900 shown in Fig. 10 are the same as the DTP editing host 100 and the electronic proofreading machine 900 shown in Fig. 2 in the external structure, respectively and thus the redundant explanation will be omitted.

Further, the hardware structure of the DTP editing host 100, the image processing apparatus 300' and the electronic proofreading machine 900 shown in Fig. 10 is the same as the hardware structure of the printing data managing host 300 shown in Fig. 3 and thus the redundant explanation will be omitted.

An image processing system, as another embodiment of the present invention, is formed and used on the above-mentioned computer network.

Here, an embodiment of the image processing program in the present embodiment is the same as the image processing program shown in Fig. 4 in the structure, and thus the redundant explanation will be omitted.

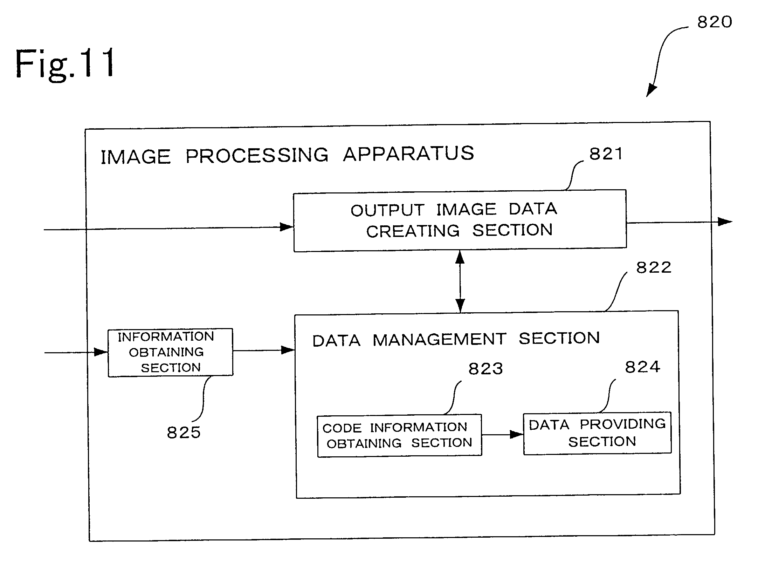

Fig. 11 is a functional block diagram showing an embodiment of an image processing apparatus in the image processing system as another embodiment of the present invention.

An image processing apparatus 820 shown in Fig. 11 is implemented, when the image processing program 510 shown in Fig. 4 is loaded onto the image processing apparatus 300' shown in Fig. 10 and Fig. 3 and is executed by the image processing apparatus 300'.

The image processing apparatus 820 shown in Fig. 11 comprises an output image data creating section 821, a data management section 822 and an information obtaining section 825. The data management device 822 comprises a code information obtaining section 823 and a data providing section 814. The output image data creating device 821, the data management device 822, the code information obtaining section 823, the data providing section 814 and the information obtaining sections 825 correspond to the output image data creating device 511, the data management device 512, the code information obtaining section 513, the data providing section 514 and the information obtaining section 515 in the image processing program 510 shown in Fig. 4, respectively. It is noted, however, that even if the same names are used between the elements of the image processing program 510 shown in Fig. 4 and the elements of the image processing program 820 shown in Fig. 11, the elements of the image processing program 510 indicate the application programs for implementing effects of the elements, and on the other hand, the elements of the image processing program 820 shown in Fig. 11 indicate a combination of hardware and software for implementing effects of the elements.

Hereinafter, the elements of the image processing program 820 shown in Fig. 11 will be explained, and whereby the elements of the image processing program 510 shown in Fig. 5 will also be explained.

The output image data creating device 821 is an element which is constructed when the output image data creating device 511 of the image processing program 510 shown in Fig. 4 is installed in the image processing apparatus 300' shown in Fig. 10 and Fig. 3. The output image data creating device 821 obtains page description data and creates output image data suitable for an output device, to which code information specifying the output image data is appended, using a job ticket selected from among a plurality of job tickets describing parameters for creating output image data suitable for an image output device outputting an image, in accordance with the obtained page description data. The output image data creating device 821 corresponds, on a hardware basis, to a combination of the keyboard 303' or the mouse 304', the image display unit 302', which are shown in Fig. 10 and Fig. 3, and the CPU 311 for executing the output image data creating device 511 (cf. Fig. 4) as a program component.

The data management device 822 is constructed when the data management section 512 of the image processing program 510 shown in Fig. 4 is installed in the image processing apparatus 300' shown in Fig. 10 and Fig. 3. The data management device 822 manages the page description data and the job ticket, which are the basis for creation of the output image data to which code information created by the output image data creating device 821 is appended, in association with the code information. It is acceptable that the data management device 822 manages the page description data and the job ticket received from the output image data creating device 821 in association with the code information. Or alteration, it is acceptable that the data management device 812 receives information specifying the page description data and the job ticket from the output image data creating device 821 and manages the page description data and the job ticket in association with the code information in accordance with the received information. Further, the data management device 822 manages, as an occasion arises, in association with the code information, in addition to the page description data, the job ticket and the editing application data, sets of various sorts of data consisting of, for example, output image data, PDF data that is intermediate data for creating the output image data from page description data, log data representative of a line work image, a continuous tone image and a processing record in the output image data creating device 821, and thumbnail image data for a preview in which the output image data is thinned out, which are associated with the page description data, the job ticket and the editing application data. Hereinafter, sets of data consisting of those various sorts of data, the page description data and job ticket are referred to as a job. The data management device 822 corresponds, on a hardware basis, to a combination of the keyboard 303' or the mouse 304', which are shown in Fig. 10 and Fig. 3, the image display unit 302', and the CPU 311 for executing the data management section 512 (cf. Fig. 4) as program components.

The data management device 822 comprises a code information obtaining section 823 for obtaining code information appended on output image data, and a data providing section 824 for providing data (for example, a name of a job ticket and information which the job ticket has) constituting a job, which are associated with the code information obtained by the code information obtaining section 823, and editing application data together with the associated code information in accordance with an operator's operation for the keyboard or the mouse of the image processing apparatus 300'. The code information obtaining section 823 and the data providing section 824 are constructed when the code information obtaining section 513 and the data providing section 514 of the image processing program 510 shown in Fig. 4 are installed in the image processing apparatus 300' shown in Fig. 10 and Fig. 3. The code information obtaining section 823 and the data providing section 824 correspond, on a hardware basis, to a combination of the keyboard 303' or the mouse 304', which are shown in Fig. 2 and Fig. 3, the image display unit 302, and the CPU 311 for executing the code information obtaining section 513 and the data providing section 514 (cf. Fig. 4) as program components.

The information obtaining section 825 is an element constructed when the information obtaining section 515 of the image processing program 510 shown in Fig. 4 is installed in the image processing apparatus 300' shown in Fig. 10 and Fig. 3. The information obtaining section 825 obtains editing application data before converted into page description data representative of an editing result, which is created by the DTP editing host 100 shown in Fig. 10 and Fig. 3, or information specifying the editing application data in association with the code information. The information obtaining section 825 corresponds, on a hardware basis, to a combination of the keyboard 303' or the mouse 304', which are shown in Fig. 10 and Fig. 3, the image display unit 302', and the CPU 311 for executing the information obtaining section 515 (cf. Fig. 4) as program components.

Incidentally, in the flowcharts shown in Fig. 7, Fig. 7 and Fig. 9, one in which the RIP WS 200 and the printing data managing host 300 are replaced by the image processing apparatus 300' is equivalent to a flowchart for an embodiment of an image processing system as another embodiment of the present invention. Thus, the redundant explanation will be omitted.

According to the above-mentioned embodiments, the page description data is explained in form of an example of page description data described in a page description language. It is noted, however, that the page description data of the present invention is not restricted to such data, and also be applicable to data described in format for page description of PDF and the like.

As mentioned above, according to the present invention, it is possible to provide image processing apparatus and image processing system capable of readily and exactly specifying editing application data, page description data and job ticket, in accordance with which the output image data is created, and an image processing program which causes a computer and a computer net work to operate as such image processing apparatus and image processing system.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An image processing apparatus comprising:
an output image data creating section for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management section for managing the page description data and the job ticket, which are the basis for creation of the output image data to which code information is appended, in association with the code information.

2. An image processing apparatus according to claim 1, wherein said data management section comprises:
a code information obtaining section for obtaining the code information appended onto the output image data; and
a data providing section for providing the page description data and the job ticket, which are associated with the code information obtained by said code information obtaining section.

3. An image processing apparatus according to claim 1, wherein said image processing apparatus further comprises information obtaining section for obtaining editing application data before converted into page description data representative of an editing result, which is created by an editing application program operating in accordance with an editing operation of an operator, or information specifying the editing application data in association with the code information,
said data management device manages the editing application data before converted into page description data as well as the page description data and the job ticket in association with the code information.

4. An image processing system comprising:
an output image data creating device for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management device for managing the page description data and the job ticket, which are the basis for creation of the output image data to which code information is appended, in association with the code information.

5. An image processing system according to claim 4, wherein said data management device comprises:
a code information obtaining section for obtaining the code information appended onto the output image data; and
a data providing section for providing the page description data and the job ticket, which are associated with the code information obtained by said code information obtaining section.

6. An image processing system according to claim 4, wherein said data management device receives from said output image data creating device the page description data and the job ticket, which are the basis for creation of the output image data to which code information is appended, and manages the page description data and the job ticket received in association with the code information.

7. An image processing system according to claim 4, wherein said data management device receives from said output image data creating device information specifying the page description data and the job ticket, which are the basis for creation of the output image data to which code information is appended, retaining the page description data and the job ticket per se in said output image data creating device, and manages the page description data and the job ticket existing in said output image data creating device in association with the code information.

8. An image processing system according to claim 4, wherein said data management device comprises information obtaining section for obtaining editing application data before converted into page description data representative of an editing result, which is created by an editing application program operating in accordance with an editing operation of an operator, or information specifying the editing application data in association with the code information, and
said data management device manages the editing application data before converted into page description data as well as the page description data and the job ticket in association with the code information.

9. An image processing program storage medium storing an image processing program which causes a computer to operate as an image processing apparatus for performing an image processing, when said image processing program is incorporated into the computer and is executed, said image processing program comprising:
an output image data creating section for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management section for managing the page description data and the job ticket, which are the basis for creation of the output image data to which code information is appended, in association with the code information.

10. An image processing program storage medium according to claim 9, wherein said data management section comprises:
a code information obtaining section for obtaining the code information appended onto the output image data; and
a data providing section for providing the page description data and the job ticket, which are associated with the code information obtained by said code information obtaining section.

11. An image processing program storage medium storing an image processing program which causes a computer network to operate as an image processing system for performing an image processing, when said image processing program is executed on the computer network to which a plurality of computers is connected, said image processing program comprising:
an output image data creating section for obtaining page description data and creating output image data suitable for an output device, to which code information specifying the output image data is appended, using a job ticket selected from among a plurality of job tickets describing parameters for creating output image data suitable for an image output device outputting an image, in accordance with the obtained page description data; and
a data management section for managing the page description data and the job ticket, which are the basis for creation of the output image data to which code information is appended, in association with the code information.

12. An image processing program storage medium according to claim 11, wherein said data management section comprises:
a code information obtaining section for obtaining the code information appended onto the output image data; and
a data providing section for providing the page description data and the job ticket, which are associated with the code information obtained by said code information obtaining section.
